# EUROPÄISCHE PATENTSCHRIFT

(11) **EP 2 904 645 B1**
(45) Veröffentlichungstag und Bekanntmachung des Hinweises auf die Patenterteilung: **21.12.2016**
(21) Anmeldenummer: 13786432.8
(22) Anmeldetag: 04.10.2013
(51) Int. Cl.: H01L 31/0525

(54) **PHOTOVOLTAISCH-THERMISCHES HYBRID-SOLARSYSTEM**
PHOTOVOLTAIC-THERMAL HYBRID SOLAR SYSTEM
SYSTÈME SOLAIRE HYBRIDE PHOTOVOLTAÏQUE-THERMIQUE

(30) Priorität: 05.10.2012 DE 102012019525
(43) Veröffentlichungstag der Anmeldung: 12.08.2015
(73) Patentinhaber: Brabenec, Maike, 79261 Gutach-Bleibach (DE)
(72) Erfinder: Brabenec, Maike, 79261 Gutach-Bleibach (DE)
(86) Internationale Anmeldenummer: PCT/EP2013/070693
(87) Internationale Veröffentlichungsnummer: WO 2014/053633

(56) Entgegenhaltungen:
- EP-A1- 1 707 897
- JP-A- 2004 176 982
- US-A- 5 167 218
- US-A1- 2004 045 596
- US-A1- 2008 047 548
- US-A1- 2011 100 425

## Beschreibung

Die Erfindung betrifft die Entwicklung eines die Sonnenenergie zur simultanen Erzeugung sowohl thermischer als auch elektrischer Energie nutzenden Gerätes (Photovoltaisch-Thermischer Hybrid-Solarkollektor oder kurz PVT).

Bei solchen Geräten tritt das Problem auf, dass sich die Grundanforderungen an die beiden Nutzungsformen bezüglich der Konstruktionsprinzipien widersprechen. Einerseits soll die Temperatur der photovoltaischen Zellen so niedrig wie möglich sein, andererseits muss für die Nutzung der thermischen Gewinne ein gewisses Niveau eben dieser Temperatur erreicht werden.

Die Dokumente JP2004176982A und US2004/045596A und Ep1707897A beschreiben Geräte zur Gewinnung von Sonnenenergie.

Dies führt zu Widersprüchen in der Anforderung an die ideale Konstruktion. So soll, wie angegeben, die Temperatur hoch für die Thermie, aber niedrig für die Elektrik sein. Weiterhin sollte eine elektrische Isolierung zwischen den Solarzellen und ihren Kühlelementen einen hohen Widerstand aufweisen, was mittels dickem nichtmetallischem Material oder eines Luftspalts zwischen diesen Elementen erreichbar wäre. Jedoch sollte in aller Regel durch eben diese Schicht viel Wärme mit möglichst geringer Temperaturdifferenz abgeführt werden, was besser durch dünne metallische Materialien zu bewerkstelligen wäre.

Widersprüchlich können zudem die Anforderungen im Bereich des Korrosionsschutzes sein. Wünschenswert wäre in vielen Teilen die Verwendung hocheffizienter Wärmeleiter aus Kupfer, was aber die Konstruktion verteuern würde. Daher wird hierfür oftmals Aluminium verwendet. Andererseits neigen gerade gekühlte Geräte zwangsläufig zur Kondensatbildung, was die Korrosionsgefahr im Vergleich zu klassischen Solargeräten drastisch erhöht.

Ferner kann die direkte Montage von Zellen auf thermischen Kollektorelementen mit Nachteilen verbunden sein, insbesondere wenn die Kollektorteile keine exakt flachen Oberflächen aufweisen sollten. Dies kann zu häufigem Bruch der Zellen führen. Die Bruchgefahr ist auch dadurch erhöht, dass die Wärmedehnung von metallischen Kühlflächen unter den Zellen regelmäßig hohe Differenzen zu derjenigen der Siliziumsolarzellen aufweisen. Als Beispiel weist Aluminium den rund dreifachen Dehnungskoeffizienten von Silizium auf.

Wenn davon ausgegangen werden sollte, dass elektrische Energie ökonomisch wertvoller ist als Wärmegewinne, könnten PVT-Geräte so gestaltet werden, dass die Solarzellen unmittelbar am Glas anliegen, das die Wärmeabfuhr unterstützt, und sich zwischen Solarzellen und Kühlelement eine Luftschicht befindet, oder auch mit Luft statt Flüssigkeit gekühlt wird. Das Kühlelement könnte hierbei aus Metall bestehen, das mit einer antikorrosiven und frostsicheren Flüssigkeit gefüllt wird. Die Füllung mit speziellem Kühlmittel behindert aber die Konstruktion effektiverer Gesamtsysteme, weil dies zwangsläufig Wärmetauscher mit begrenztem Wirkungsgrad sowie aufwändigen Druckspeichern erfordert.

Eine sich von üblichen Konstruktionen unterscheidende Entwicklungslinie von thermischen Kollektoren basiert auf einer elastischen Wasserführung in enger Verbindung mit einem metallischen Wärmeleiter, siehe z.B. die DE 28 30 353 A.

Weiterhin ist aus der DE 20 2007 010 901.6 ein PVT-Systems bekannt, dessen photovoltaische Module ein wärmeleitfähiges Blech auf der sonnenabgewandten Seite aufweisen, das mit einem Hohlraum und einem darin befindlichen Schlauchmaterial in Kontakt steht..

Mit der Erfindung wird ein Gerät zur simultanen Gewinnung von Sonnenenergie in sowohl thermischer als auch elektrischer Form geschaffen, wie es im Patentanspruch 1 definiert ist.

Vorteilhafte Ausgestaltungen der Erfindung sind in den weiteren Ansprüchen angegeben.

Der Erfinder hat erkannt, dass die Isolierbeschichtung zwischen Solarzellen und metallischem Kühlelement bei einer Zwischenlage einer Folie aus einem fluorhaltigen Polymer in zwei Klebschichten mehr als zwei Millimeter betragen sollte, und dass das relativ dünne Trägerelement bei Biegungen die Solarzellen leicht brechen lässt. Dies wird bei den nachfolgend beschriebenen Ausführungsbeispielen der Erfindung vermieden. Zudem ist bei den dargestellten Ausführungsbeispielen kein Andruck eines z.B. omegaförmigen Teils eines Kühlelementes erforderlich, so dass der Fertigungsaufwand reduziert und die Störunanfälligkeit verbessert ist.

Damit können die Temperaturdifferenzen zwischen Zelle und Kühlmittel deutlich reduziert werden und betragen weit weniger als z.B. 15 °C, was die Nutztemperatur erhöht, bzw. die Zellentemperatur senkt, mit der Folge erhöhter Stromausbeute.

Damit lassen sich hohe thermische Erträge zu relativ niedrigen Herstellungskosten erreichen. Außerdem reicht das erreichbare Temperaturniveau aus, um zusätzlich zu einer hohen Stromgenerierung höhere Temperaturen für Heiz- oder Kühlanlagen, wie nachstehend beschrieben, zu erzeugen.

Weiterhin sind konstruktive Probleme verringert, da eine andernfalls eventuell vorhandene Neigung gekühlter Zellen, aufgrund thermischer Spannungen und mechanischer Belastung bei der Laminierung auf Metallflächen Mikrorisse auszubilden, beseitigt ist. Die Zellen können bündig auf die Metallfläche laminiert sein, was die Wärmeabfuhr durch Vermeidung einer Spaltenbildung zwischen Zelle und Kühlfläche verbessert.

Bei dem dargestellten Ausführungsbeispiel der Erfindung ist eine Konstruktion realisiert, bei der die Kühlstränge so eng beieinander stehen können, dass keine hohen Temperaturgradienten innerhalb der Zelle entstehen, und eine unter thermischer Belastung möglichst elastische, aber ausreichend wärmeleitende und zugleich elektrisch isolierende Befestigungsschicht realisiert ist.

Die im Betrieb erreichbare Temperatur stellt eine weitere Herausforderung dar, der die Erfindung gewachsen ist. Gerade in den Regionen, in denen eine Kühlung der Zellen am meisten Vorteile bringt, also den heißen Ländern, wird am wenigsten Wärme benötigt. Mit den Ausführungsbeispielen der Erfindung wird ein gutes und wirtschaftlich einsetzbares PVT-Gerät geschaffen, das in der Lage ist, eine Temperatur zu liefern, die ausreichend in der Lage ist, eine Adsorptionskältemaschine anzutreiben. Solche Geräte erfordern z.B. ein Temperaturniveau von mindestens 60°C, was bei einer Konstruktion mit Kontakt der Zellen zum Glas wegen hoher Abstrahlung über das Glas nicht zuverlässig erreicht werden könnte, aber aufgrund des Luftspaltes von der erfindungsgemäßen Konstruktion ermöglicht wird.

Die vorliegende Erfindung beschreibt einen Weg, wie sich auf der Grundlage eines Kühlsystems mit elastischer Wasserführung mit einem PVT-Gerät im Endeffekt höhere Erträge mit Hilfe einer wirtschaftlich herstellbaren Konstruktion erreichen lassen. Hierdurch lässt sich verbesserte Wirtschaftlichkeit erzielen.

Dies kann z.B. durch die Kombination von einem, mehreren oder allen der folgenden Merkmale erreicht werden.

Zunächst ist eine Einführung einer sehr dünnen, ausreichend Wärme leitenden aber zugleich elektrisch isolierenden Beschichtung zwischen Solarzellen und direkt darunter befindlichem Kühlelement vorgesehen. Dies kann erfindungsgemäß durch Verwendung einer speziellen Mischung von Stoffen in mehrschichtiger Bauweise erreicht werden, wie nachstehend näher beschrieben.

Es kann ein aus einzelnen, in sich ebenen Profilelementen zusammengesetztes Kühlelement verwendet werden, das direkt in enger und relativ großflächiger Verbindung mit thermisch stabilen Schläuchen steht, die als Kühlmittel gewöhnliches Wasser enthalten können, und die durch den Innendruck stets an das Metall des Kühlelementes angepresst werden. Konstruktiv wird vorzugsweise ein Freiraum zur schadlosen Ausdehnung bei der Bildung von Eis im Frostfall gelassen. Die Kühlfläche kann durch ein Nut- und Federsystem aus steifen Profilen gebildet werden, welche die Bruchgefahr vermindern.

Ein Luftspalt kann zwischen den Solarzellen und der Glasabdeckung vorgesehen sein, so dass sich bei niedrigem Kühlmitteldurchfluss eine erhöhte Temperatur einstellen lässt.

Mittels eines Mess- und Regelsystems können die Temperatur und der Stromertrag auf die Bedürfnisse des Verbrauchers optimiert abgestimmt werden. Dies kann z.B. über die Steuerung des Durchflusses erfolgen.

Das Gesamtsystem stellt beispielsweise ausreichend Kapazität zur Wärmeaufnahme in Form kühleren Wassers, beispielsweise aus einem Erdspeicher, zur Verfügung, um die Anforderungen des Regelsystems zu erfüllen.

Mit dem erfindungsgemäßen Hybridsolarkollektor und System lässt sich Sonnenenergie zur simultanen Gewinnung sowohl in thermischer als auch elektrischer Energie auf wirtschaftliche Weise nutzen.

Erfindungsgemäß kann dazu bei einem oder mehreren Ausführungsbeispielen im Energiesammelgerät eine Kombination aufeinander abgestimmter Verbesserungen eingesetzt werden, um auf der Entwicklungslinie der Photovoltaisch-Thermischen Hybrid-Solarkollektoren ("PVT-Geräte") mit elastischer Wasserführung eine funktionsfähige, sicherheitstechnisch unbedenkliche, mit hohem Wirkungsgrad arbeitende und doch wirtschaftlich herstellbare Anordnung zu schaffen, die auch einen verbesserten Schutz gegen Korrosion und Bruch bietet.

Ausführungsbeispiele der Erfindung zeichnen sich durch eines, mehrere oder alle nachstehend angegebenen Elemente aus.

Es wird einfaches Wasser als Kühlmittel in frostsicherer Führung durch Schläuche, vorzugsweise aus Silikonkautschuk, verwendet.

Zugleich ist ein intensiver Kontakt der Schläuche zu einer gut leitenden Metallfläche realisiert, die vorzugsweise aus ebenen Profilelementen zusammengesetzt ist.

Die Metallfläche ist mit den Solarzellen über eine elektrisch stark isolierende, aber thermisch ausreichend leitfähige dünne Trennschicht in geeigneter Weise verbunden. Die Trennschicht ist mit mindestens zwei verschiedenen Oxiden oder Silikaten, ausgestattet, von denen eines in extrem niederer Korngröße vorliegt,.

Hierbei kann z.B. eines der Oxide oder Silikate eine Partikelgröße von im Mittel unter einem Mikrometer aufweisen. Die Partikelgrößenverteilung kann bei einem oder mehreren Ausführungsbeispielen insgesamt zwei stark differierende Maxima aufweisen, wobei z.B. die durchschnittliche Korngröße der einen Komponente der isolierenden Trennschicht, also z.B. des Oxids oder des Silikats, mindestens den zehnfachen Wert der durchschnittlichen Korngröße der anderen Komponente der isolierenden Trennschicht, also z.B. des Silikats oder des Oxids, betragen kann. Hierdurch wird unter anderem überraschend eine extrem hohe elektrische Spannungsbeständigkeit ohne elektrische Überschläge erreicht.

Die Solarzellen stehen nicht in direktem Kontakt mit einem abdeckenden Glas, sondern es befindet sich dazwischen eine Luftschicht.

Diese Anordnung ist durch Dimensionierung, Einkapselung und Materialauswahl so gestaltet, dass die Aufwärmzeit begrenzt ist und die bei PVT-Hybridkonstruktionen häufige Kondensatbildung keine Korrosion verursachen kann.

Weiterhin ist das Sammelgerät vorzugsweise mit einem nutzerspezifisch programmierbaren Mess- und Regelsystem ausgestattet und in ein geeignetes Gesamtsystem eingebunden, das durch hohe Kühlkapazität, Wasser als Medium und die Verwendung von mindestens zwei Speichern auf verschiedenen Temperaturniveaus charakterisiert ist.

Die Erfindung wird nachstehend anhand von Ausführungsbeispielen unter Bezugnahme auf die Zeichnungen näher beschrieben.
Fig. 1 zeigt ein Beispiel eines Profils eines Kühlelementes mit Glas und Luftspalt,
Fig. 2 veranschaulicht eine Vergrößerung zu Fig. 1, und
Fig. 3 zeigt ein Ausführungsbeispiel einer erfindungsgemäßen PVT Gesamtanlage mit einer schematischen Darstellung des wärmetechnischen Anlagenteils.

Im folgenden werden zunächst einzelne Komponenten der Ausführungsbeispiele erläutert.

Bei den Ausführungsbeispielen ist eine Isolierbeschichtung 5 vorgesehen. Eine besondere Herausforderung stellt die erforderliche Sicherung der elektrischen Durchschlagfestigkeit bei gleichzeitig gesteigerter Wärmeleiteigenschaft in der Schicht 5 zwischen einer oder mehreren Solarzellen 1 und einem Kühlelement 7 dar. Das Kühlelement 7 kann z.B. aus Aluminium oder einer seiner Legierungen bestehen.

Hierbei ist eine Isolierung vorgesehen, die aus mindestens zwei, vorzugsweise drei Teilschichten besteht, und zwar von der Solarzelle aus betrachtet in folgender Reihenfolge:
a) eine Laminierung (Laminat) 4 mit einem z.B. auch für die Abdeckung 2 verwendeten polymeren Ethyl- Vinyl-Acetat (EVA),
b) eine Schicht (Isolierschicht) 5, bestehend aus einem lackbildenden Polymer,z.B. Kunstharz oder Epoxydharz, beispielsweise Alkydharz, in dem mindestens zwei verschiedene, auf molekularer Ebene unterschiedlich strukturierte Nichtmetalle, vorzugsweise Oxide oder Silikate, gemeinsam eingebunden sind, wobei die Korngrößenverteilung so ausgestaltet wird, dass mindestens zwei verschiedene Maxima vorkommen, deren größere eine mindestens zehnfache, vorzugsweise mindestens zwanzigfache mittlere Korngröße als das Maximum der kleineren aufweist, die mit einer mittleren Korngröße unter einem Mikrometer (sogenannte Nanopartikel) versehen ist.
c) eine nicht notwendigerweise, aber bei einem oder mehreren Ausführungsbeispielen vorhandene, die Isolierwirkung absichernde dritte Schicht 6, und zwar vorzugsweise eine an das Kühlelement 7, z.B. durch die Herstellung, fest gebundene starke Eloxalschicht 6.

In Experimenten hat sich gezeigt, dass die Einhaltung dieser Bedingungen, beispielsweise unter Verwendung von Eisenoxid als Grobpigment und Titanoxid als Nanopartikelanteil oder auch Siliziumdioxid als Grobpigment und Eisenoxid als Feinanteil in der einem Lack ähnlichen Schicht 5, den elektrischen Strom bei gleicher Schichtstärke gegenüber einfacher Ausstattung mit einem handelsüblichen Isolierlack erst bei der bis zu achtfach höheren Spannung fließen lässt. Beispielsweise wird für die Schicht eine Beimischung von mindestens 5 %, günstig 9 bis 10 % (bezogen auf den Rohlack) an Eisenoxid mit einer mittleren Korngröße unter 0,8 Mikrometer sowie eine vergleichbare Menge an Siliziumdioxid mit einer mittleren Korngröße von 30 Mikrometern verwendet.

In der Praxis bedeutet das, dass mit einer Schichtstärke von unter 200 Mikrometer (ohne EVA) eine Spannung von 2000 Volt noch beherrscht werden kann. Verstärkt man die Schichtstärke, so sind Spannungen von über 4000 Volt beherrschbar, wohingegen ein handelsüblicher Isolierlack schon bei etwa 200-500 V deutliche Stromstärken fließen lässt.

Mit der erfindungsgemäßen Schicht und Anordnung sinkt die insgesamt erforderliche Temperaturdifferenz für den Wärmetransport zwischen Zelle 1 und Kühlwasser 9 auf in der Regel unter 10 °C, so dass eine effektive Wärmenutzung auf realistisch nutzbarem Temperaturniveau eingestellt werden kann.

Im Folgenden wird das Kühlelement 7 näher beschrieben.

Das Kühlelement 7 ist vorzugsweise als eine Metallfläche ausgebildet und übernimmt die Aufgabe, jeweils einen innigen Kontakt zu dem die Wasserführung bewerkstelligenden Schlauchmaterial des oder der Schläuche 8 einerseits und der sonnenabgewandten Seite der Zellen andererseits herzustellen. Die Metallfläche weist eine, mehrere oder vorzugsweise alle folgenden Eigenschaften auf.

Die Metallfläche ist aus Profilen zusammen gesetzt, die jeweils an eine Breite der Zellen 1 angepasst sind.

Die Profile bestehen vorzugsweise aus Aluminium oder einer Aluminiumlegierung und verfügen auf der von den Zellen 1 abgewandten Seite über mindestens eine doppelte Halteschiene 15. Jede Halteschiene 15 dient zum Halten des Schlauchs 8 und weist z.B. hornförmig gebogene oder abgewinkelte Klammerbacken 16 auf, die in gegenseitigem Abstand enden und damit zwischen sich eine Öffnung 17 für einen Dehnungsraum 10 ausbilden. Der durch die Halteschienen 15 gebildete Hohlraum ist vorzugsweise tropfenförmig und nach unten offen geformt, um das Schlauchmaterial des Schlauchs 8 formstabil aufzunehmen und festzuhalten und dessen bedarfsweise Ausdehnung (z.B. bei Frost) in den Dehnungsraum 10 zu ermöglichen. Das Schlauchmaterial des Schlauchs 8 kann z.B. vorzugsweise aus Silikonkautschuk bestehen. Der Schlauch 8 kann ein wasserbasiertes Kühlmittel 9 enthalten.

Die Halteschienen 15 sind jeweils für einen Querschnitt des Schlauchmaterials von z.B. maximal zehn Millimeter Durchmesser geeignet, um die Wärmekapazität zu begrenzen.

Es ist bei einem oder mehreren Ausführungsbeispielen mindestens eine Schlauchführung (Halteschiene 15) für je achtzig Millimeter Breite der zu kühlenden Solarzelle 1 (siehe Zeichnung) verwendet, um den Temperaturgradienten innerhalb der Zellen 1 gering zu halten. Die Schlauchführung bzw. Halteschiene 15 befindet sich auf der der Glasabdeckung 14 abgewandten Oberfläche (Unterseite) der Solarzelle 1 jeweils vorzugsweise direkt unterhalb von elektrischen Sammelbändern ("busbars") 3, die auf der der Glasabdeckung 14 zugewandten Oberfläche der Solarzelle 1 angeordnet sind.

Die Verbindung der Profile untereinander wird durch eine Nut- und Federverbindung mit randseitigen Nuten und Federn 12 erleichtert. An einer Stelle 12a ist die Stärke jeder Feder deutlich niedriger als die Stärke des Profils in der Hauptfläche gewählt, so dass die Feder bei Überlastung durch Biegung in Querrichtung zu den Schläuchen als Sollbruchstelle funktioniert, um die auf der Hauptfläche auflaminierten Solarzellen zu schützen.

Unterhalb der eigentlichen Schlauchführung befindet sich ein Ausdehnungsraum 10, der ein bei Eisbildung im Schlauch vergrößertes Volumen schadlos aufnehmen kann.

Diese Konstruktion ermöglicht auch die Anordnung der Kühlprofile und damit des oder der Schläuche 8 in Form einer Rohrharfe, die bekanntermaßen einen niedrigen Innenwiderstand für den Kühlmittelfluss zur Folge hat. Das gleiche gilt auch für die Gesamtanlage, die nachstehend noch näher beschrieben ist.

Dies wiederum erfüllt die Voraussetzungen, um eine geregelte Kühlung durch Ansteuerung der Durchlaufgeschwindigkeit bei geringem Energieaufwand für das Gesamtsystem anzuwenden, und damit das System als Ganzes zu optimieren. Die Steuerung der Durchlaufgeschwindigkeit kann in der Regel elektronisch, in gewissem Maße auch unter Verwendung des Thermosiphonprinzips erfolgen.

Eine vorteilhafte Ergänzung des beschriebenen PVT-Gerätes stellt bei einem oder mehreren Ausführungsbeispielen ferner die Dämmung der Rückseite des Gerätes mit einem Material dar, das die erforderliche Dämmleistung auf engstem Raum ermöglicht, also dünn ist, um die Kosten für den Rahmen und dessen Bauhöhe z.B. auf Dächern zu begrenzen, andererseits thermisch auch dann stabil bleibt, wenn die Kühlung für längere Zeit ausfällt.

Hierbei sind Temperaturen von über 150 °C zu berücksichtigen. Vor allem muss dieses Material eine niedrige Wärmekapazität aufweisen, um eine kurze Aufwärmzeit zu gewährleisten, was wiederum die Ausdampfung von Kondensat erleichtert.

Erfindungsgemäß wird daher die beschriebene Konstruktion mit einem auch bei derartigen Verhältnissen sich nicht verformenden (sogenannten Hochtemperatur-) Hartschaum auf Basis von Polyurethan ausgestattet, das vorzugsweise einen Wärmeleitwert von unter 0,03 W/mK sowie eine Dichte von unter 0,5 aufweist.

Bei einem oder mehreren Ausführungsbeispielen ist ein Luftspalt 13 über den Solarzellen 1 vorgesehen. Die Luftschicht 3 ist zwischen Absorberfläche und Glasabdeckung 14 angeordnet und in ihrer Dimensionierung so beschaffen, dass sie einerseits groß genug ist, um eine direkte Ableitung der Wärme und die Infrarotübertragung der Wärme in Richtung der Abdeckung zu behindern (vorzugsweise mit einer Dicke ab 3 mm), und andererseits schmal genug ist, um den Verlust durch Konvektionsübertragung an das Deckglas 14 zu vermeiden (vorzugsweise bis maximal 20 mm). Die Luftschichtdicke liegt also vorzugsweise zwischen 3 und 20 mm oder optional zwischen 3 und 12 mm.

Die bekannten Nachteile eines solchen Luftspaltes kommen dann nicht zur Geltung. Vorzugsweise sorgen die bei dem dargestellten Ausführungsbeispiel vorgesehene dünne Isolierschicht 5 sowie das notwendigerweise vorgesehene Regelsystem dafür, dass die Zellentemperatur sowohl bezüglich des Temperaturniveaus als auch zeitlich sinnvoll begrenzt bleibt.

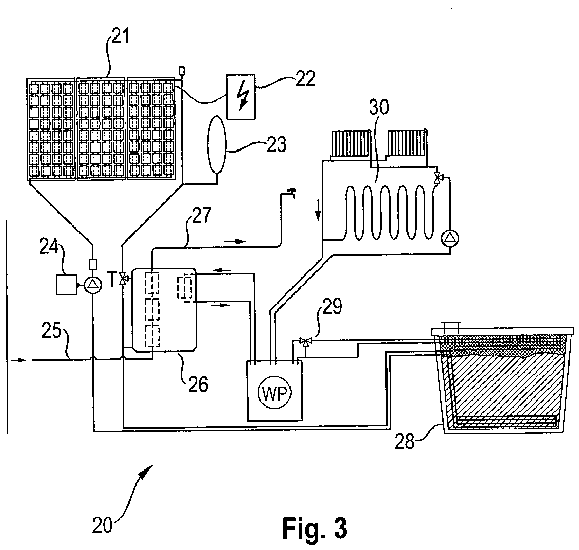

Im folgenden wird das Mess- und Regelsystem des Hybridkollektors oder der PVT-Anlage beschrieben, wie es in Fig. 3 als Ausführungsbeispiel gezeigt ist.

Bei der PVT-Anlage ist eine Zellentemperatur von rund 40 bis 75 °C vorgesehen, die möglichst exakt eingehalten wird. Hierdurch lässt sich sowohl ein guter Stromertrag als auch eine Wärmelieferung auf einem brauchbaren Temperaturniveau erreichen. Dies erlaubt einen Kompromiss zwischen Stromerzeugung und Temperaturlieferung. Die Zellentemperatur von rund 65 bis 75 °C wird vorzugsweise nur so lange eingehalten, wie sich die Wärmeerzeugung, z.B. an individuellen Verhältnissen orientiert, ökonomisch günstiger auswirkt als die Stromerzeugung.

Hierzu trägt die vorstehend beschriebene und in Fig. 3 gezeigte Konstruktion des Energie-Sammelgerätes bei. Ferner ist eine Regelung vorhanden, die eine solche Anforderung abdeckt. Das PVT-Gerät ist in der Lage, eine angesteuerte, gewünschte Temperatur auch zu liefern. Hierzu wird vorzugsweise die Wärmekapazität des Kühlelementes konstruktiv wie beschrieben begrenzt. Die Durchströmung mit dem Kühlmittel erfolgt bei dem dargestellten Ausführungsbeispiel infolge eines niedrigen Innenwiderstandes gleichmäßig, reibungsarm und doch ausreichend schnell.

Diese Eigenschaften werden bei dem dargestellten Ausführungsbeispiel durch möglichst parallele Verlegung der Kühlschläuche 8 in an sich bekannter Weise (Tichelmann'sche Rohrführung) erreicht, wozu die Grundkonstruktion des PVT-Gerätes angepasst konstruiert ist.

Dies ist bei der oben beschriebenen und in den Zeichnungen dargestellten Gestaltung in Form des Zusammenfügens der Profilelemente mit Hilfe der Nut- und Federkonstruktion 12 zu einer Rohrharfe gegeben. Die Einzelheiten der Programmierung des Mess- und Regelsystems erfolgen dann in an sich bekannter Weise.

Diese Konstruktion hat zugleich zur Folge, dass die Bildung von Kondensat, das Korrosion verursachen könnte, durch einfache Belüftungsmaßnahmen wie verdeckte Schlitze im Rahmen verhindert bzw. in ausreichender Zeit rückgängig gemacht werden kann. Dabei finden bei dem Ausführungsbeispiel keinerlei elektrochemisch unverträgliche Metallkombinationen Verwendung. Kupfer in elektrischen Leitungen kann dabei durch Abdecken vom Laminat oder von einer Kabelumhüllung auf einfachste Weise geschützt sein.

Bei dem dargestellten Ausführungsbeispiel kann die Anordnung durch Dimensionierung und Materialauswahl so gestaltet sein, dass die Aufwärmzeit auf eine halbe Stunde begrenzt ist und eine eventuelle Kondensatbildung keine Korrosion verursachen kann.

Im folgenden wird das angepasste Gesamtsystem beschrieben.

Bei einem oder mehreren Ausführungsbeispielen des Geräts ist die metallische Kühlfläche aus Profilen gebildet, auf deren isolierender Beschichtung die Solarzellen vollflächig und im Anwendungsbereich bezüglich der Wärmedehnung ausreichend elastisch auflaminiert sind.

Das Kühlmittel 9 strömt in frostsicherer Führung durch die Schläuche 8.

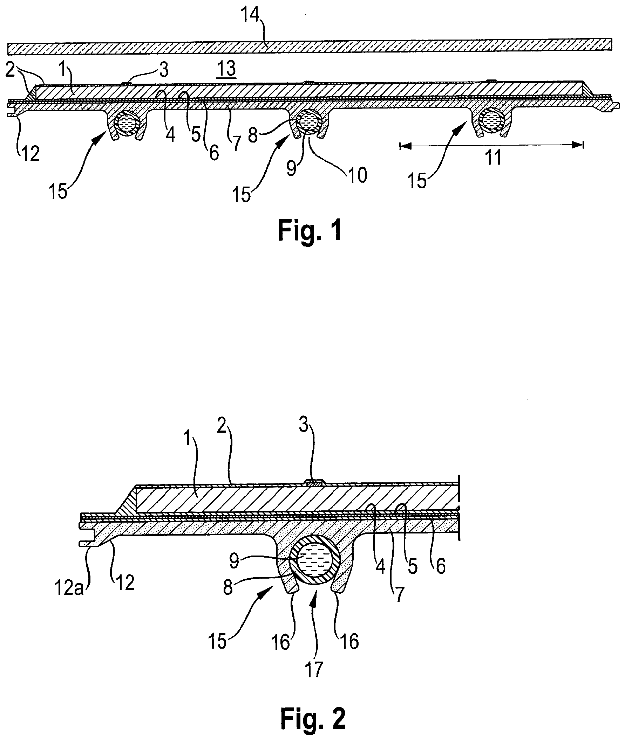

Zur effektiven, wirtschaftlichen Funktion eines in Fig. 3 dargestellten PVT-Systems 20 ist neben einem geeigneten Energie-Sammelgerät 21, z.B. dem PVT-Gerät gemäß Fig. 1 und 2, und der beschriebenen angepassten Steuerung ein dazu passendes wärmetechnisches Konzept mit ausreichend großer Kühlkapazität vorgesehen.

In Fig. 3 ist die PVT-Anlage 20 schematisch ohne elektrische Verschaltung dargestellt. Ein Wechselrichter 22 mit herkömmlichem Netzanschluss ist mit dem Strom-Ausgang der Solarzelle 1 verbunden. Mit dem Bezugszeichen 23 ist ein Ausdehnungsgefäß, ggf. mit Gegendruck, für das Wärmeträger-/Kühlmittel 9 bezeichnet, das über ein Leitungssystem und ein Ventil mit einem Pufferspeicher 26 für höhere Temperaturniveaus verbunden ist. Der Druck im Pufferspeicher 26 entspricht der Höhe des Solarfelds.

Eine elektronische Regeleinheit 24 steuert Pumpen in Abhängigkeit von Temperaturdifferenzen und dem aktuellen Bedarf. Kaltes Medium, z.B. Wasser, wird über einen Kaltwasserzufluss 25 zugeführt.

Eine Warmwasserleitung 27 mit Wärmetauscher im Pufferspeicher 26 ermöglicht die Entnahme von durch den erfindungsgemäßen Hybridkollektor aufgeheiztem Medium, z.B. Wasser.

Ein großer Niedertemperaturspeicher 28 ist z.B. mit Wasser oder mit Wasser und Steinen gefüllt.

Eine Wärmepumpe WP mit Wärmetauscher ist mit einem Wärmepumpenzulauf 29 aus einem Wärmetauscher im Speicher 28 verbunden.

Ein Heizungssystem 30 kann mit niedriger Vorlauftemperatur von der Wärmepumpe gespeist werden.

Bei dem dargestellten Ausführungsbeispiel besteht das zu dem beschriebenen PVT-Gerät 21 passende wärmeabführende System neben den erforderlichen Leitungen, Ventilen und Pumpen (zu den Einzelheiten der Gestaltung und Anordnung wird ausdrücklich auf die Darstellung gemäss Fig. 3 und die vorstehenden Ausführungen verwiesen) aus einem Speicher, z.B. dem Speicher 26, der das höchste vom Nutzer gewünschte Temperaturniveau erreicht, sowie einem Langzeitspeicher, z.B. dem Speicher 28 mit einem niedrigeren Temperaturniveau, und dem dazu passenden System, das im vorliegenden Fall durch die Verwendbarkeit von Wasser anstelle von Frostschutzmittelmischungen besonders preisgünstig und effektiv gestaltet sein kann.

Dabei wird der höher temperierte erste Speicher 26 nur so lange mit erhöhter Temperatur versorgt, wie zum Erreichen der Nutztemperatur und Nutzwärmemenge erforderlich ist, wonach das Regelsystem anschließend auf höhere Durchflussgeschwindigkeit und die ökonomisch optimierte Aufwärmung des Langzeitspeichers 28 umschaltet.

### Bezugszeichenliste zu den Figuren 1 bis 3:

- 1: Solarzelle (hier als Beispiel 156 mm breit)
- 2: Laminat (z.B. vernetztes Ethyl-Vinyl-Acetat) über Zellen und Kühlelement 7
- 3: Busbars (aufgelötete metallische Bänder für die elektrische Leitung)
- 4: Laminat unter Solarzellen 1
- 5: Isolierschicht, vorzugsweise polymergebunden, die vorzugsweise zwei verschiedene Oxide in verschiedenen Größen enthält
- 6: Eloxalschicht
- 7: Profilförmiges Kühlelement als Träger der Solarzellen
- 8: Schlauch, vorzugsweise aus wärmebeständigem Schlauchmaterial, z.B. Silikonkautschuk
- 9: Wärmeträger, hier Wasser mit oder ohne anorganische Bestandteile
- 10: Dehnungsraum für Eisbildung
- 11: Kühlbereich je Schlauchstrang, vorzugsweise unter 80 mm (hier z.B. ca. 52 mm)
- 12: Nut- und Feder des Profils mit Sollbruchstelle 12a für Überdehnung
- 12a: Sollbruchstelle
- 13: Luftspalt von z.B. 3 bis 20mm oder auch 3 bis 12 mm
- 14: Glasabdeckung, vorzugsweise aus thermisch vorbehandeltem eisenarmem Glas
- 15: Halteschiene für Schlauch 8
- 16: Klammerbacken
- 17: Öffnung für Dehnungsraum 10
- 20: PVT-Anlage schematisch (ohne elektrische Verschaltung dargestellt)
- 21: PVT-Gerät z.B. gemäß Fig. 1, 2
- 22: Wechselrichter mit herkömmlichem Netzanschluss
- 23: Ausdehnungsgefäß, ggf. mit Gegendruck
- 24: Elektronische Regeleinheit, steuert Pumpen in Abhängigkeit von Temperaturdifferenzen und Bedarf
- 25: Kaltwasserzufluss
- 26: Pufferspeicher für höhere Temperaturniveaus, Druck entspricht Höhe Solarfeld
- 27: Warmwasserleitung mit Wärmetauscher im Pufferspeicher
- 28: Großer Niedertemperaturspeicher, gefüllt z.B. mit Wasser und Grobkies
- 29: Wärmepumpenzulauf aus Wärmetauscher im Speicher
- 30: Heizungssystem mit niedriger Vorlauftemperatur

## Patentansprüche

1. Gerät zur simultanen Gewinnung von Sonnenenergie in sowohl thermischer als auch Form, das folgende Merkmale aufweist:
Solarzellen (1), Schläuche (8), die mit Wasser als Kühlmittel (9) gefüllt sind und optional
aus Silikonkautschuk bestehen, eine thermisch gut leitende Metallfläche (7) mit einer Haltevorrichtung (15), die mit den Schläuchen (8) in vorzugsweise intensivem Kontakt steht, die Metallfläche (7) ist ihrerseits über eine elektrisch stark isolierende, aber thermisch leitfähige dünne Trennschicht (4,5,6) mit den Solarzellen (1) elastisch verbunden, zwischen den Solarzellen (1) und einem abdeckenden Glas (14) befindet sich eine Luftschicht (13) mit einer Stärke von bis zu 20mm, optional z wischen drei und zwölf Millimeter, so dass die Solarzellen (1) nicht in direktem Kontakt mit dem abdeckenden Glas **(14)** stehen,
wobei die isolierende Trennschicht zwischen den Solarzellen und dem metallischen Kühlelement mit mindestens zwei verschiedenen Oxiden oder Silikaten ausgestattet ist, von denen sich mindestens eines in einer lackartigen Polymerschicht befindet, wobei ein Teil der Oxide oder Silikate eine Partikelgröße von im Mittel unter einem Mikrometer aufweist, und
**dadurch gekennzeichnet, dass** die Partikelgrößenverteilung insgesamt zwei stark differierende Maxima aufweist, so daß die durchschnittliche Korngröße des einen Maximums der Partikel in der isolierenden Trennschicht mindestens den zehnfachen Wert des anderen Maximums der Korngrößenverteilung beträgt.

2. Gerät nach Anspruch 1, bei dem die Metallfläche (7) als metallische Kühlfläche dient und aus Profilen gebildet ist, auf deren isolierender Beschichtung die Solarzellen vollflächig elastisch auflaminiert sind.

3. Gerät nach Ansprüchen 2, wobei die Profile über eine Nut- und Federverbindung (12) so verbunden sind, dass eine flache Gesamtfläche entsteht, und/oder die Profile an den Verbindungslinien eine dünne Stelle (12a) aufweisen, die aufgrund ihrer geringen Dimensionierung als Sollbruchstelle fungiert.

4. Gerät nach einem der Ansprüche 1 bis 3, bei dem eine rückseitige Wärmedämmung vorgesehen ist, die aus einem noch über 150 °C beständigen Hartschaum auf Basis von Polyurethan besteht.

5. Gerät nach einem der vorhergehenden Ansprüche, bei dem die Haltevorrichtung (15) mehrere gebogene oder gekrümmte Halteelemente aufweist, in denen jeweils ein Schlauch (8) gehalten ist und deren einander zugewandte Spitzen (16) sich in einem Abstand befinden, der kleiner als der Durchmesser der Schläuche ist.

6. Gerät nach einem der vorhergehenden Ansprüche, bei dem die Schläuche (8) aus Silikonkautschuk bestehen.

7. Gerät nach einem der vorhergehenden Ansprüche, bei dem die Luftschicht (13) eine Stärke zwischen drei und zwölf Millimetern aufweist.

8. Anlagensystem zur simultanen Gewinnung von Sonnenenergie in sowohl thermischer als auch elektrischer Form, das mit einem Gerät nach einem der Ansprüche 1 bis 7 ausgestattet ist.

9. Anlagensystem nach Anspruch 8, mit einem Element zur Regelung des Durchflusses auf elektronische Weise oder durch Anwendung des Thermosiphonprinzips derart, dass sich eine für den Anwendungszweck geeignete Temperatur im Kühlmittel, z.B. Kühlwasser, einstellt.

10. Gerät nach Anspruch 8 oder 9, das mit mindestens einem Speicher (28) ausgestattet ist, der vorzugsweise je Quadratmeter Absorberfläche mehr als vierhundert Liter Wasser oder sechshundert Liter eines Stein-/Wassergemenges aufweist, und/oder mit einer Wärmepumpe (WP) und/oder die Wärme nutzenden Kältemaschine verbunden ist, und/oder mindestens einen ersten Speicher (26), der ein vorgegebenes Temperaturniveau aufweist, sowie mindestens eine weiteren, als Langzeitspeicher (28) dienenden Speicher mit einem anderen Temperaturniveau aufweist.

11. Anlagensystem nach Anspruch 8, 9 oder 10, wobei das System dazu ausgelegt ist, den höher temperierten ersten Speicher (26) nur so lange mit Kühlmittel (9) erhöhter Temperatur zu versorgen, wie zum Erreichen einer Nutztemperatur und einer Nutzwärmemenge erforderlich ist, und ein Regelsystem anschließend auf höhere Durchflussgeschwindigkeit und die Aufwärmung des zweiten oder weiteren Speichers (28) umzuschalten.

## Claims

1. Apparatus for the simultaneous collection of solar energy in both thermal and electrical form which features the following characteristics:
Solar cells (1), hoses (8) which are filled with water as a coolant (9) and are optionally made of silicone rubber, a metal surface with good thermal conductivity (7) with a retaining mechanism (15) which preferably has intensive contact with the hoses (8); the metal surface (7) is in turn elastically connected to the solar cells (1) via a highly electrically insulating but thermally conductive thin separating layer (4, 5, 6); between the solar cells (1) and a covering pane of glass (14) there is a layer of air (13) which is up to 20 mm thick, optionally between three and twelve millimetres, so that the solar cells (1) are not in direct contact with the covering pane of glass (14),
whereby the insulating separating layer between the solar cells and the metallic cooling element is equipped with at least two different oxides or silicates, of which at least one is situated inside a varnish-like polymer layer,
whereby a part of the oxides or silicates has a mean particle size of less than a micrometre, and is **characterised in that** the particle size distribution features two strongly differing maxima overall, so that the average particle size of the one maximum of the particles in the insulating separating layer has at least ten times the value of the other maximum of particle size distribution.

2. Apparatus as in Claim 1, **characterised in that** the metal surface (7) serves as a metallic cooling surface and is formed from sections which are covered with an insulating coating on which the solar cells are completely elastically laminated.

3. Apparatus as in Claim 2, whereby the sections are optionally connected with a tongue and groove connection (12) in such a way that a flat overall surface is formed, and/or the sections optionally feature a thin part (12a) on the connecting lines which due to its small dimensions acts as a pre-determined breaking point.

4. Apparatus as in one of Claims 1 to 3, **characterised in that** thermal insulation is provided on the rear which consists of hard polyurethane-based foam which is resistant to temperatures of over 150°C.

5. Apparatus as in one of the previous claims, **characterised in that** the retaining mechanism (15) features several bent or curved retaining elements in each of which a hose (8) is held and the tips (16) of which are located facing each other at a distance which is smaller than the diameter of the hoses.

6. Apparatus as in one of the previous claims, **characterised in that** the hoses (8) are made of silicone rubber.

7. Apparatus as in one of the previous claims, **characterised in that** the air layer (13) exhibits a thickness of between three and twelve millimetres.

8. Plant system for the simultaneous collection of solar energy in both thermal and electrical form which is equipped with a device as described in one of the Claims 1 to 7.

9. Plant system as in Claim 8, with an element for regulating the flow by electronic means or through using the thermosiphon principle in such a manner that the coolant, for example water, reaches a suitable temperature for the intended purpose.

10. Plant system as in Claim 8 or 9 which is equipped with at least one reservoir (28) which preferably features more than four hundred litres of water or six hundred litres of a stone/water mixture per square metre, and/or is connected to a heat pump and/or the cooling unit which makes use of the heat, and/or exhibits at least one initial reservoir (26) which features a prescribed temperature, and also at least one further reservoir which serves as long-term storage (28) with a different temperature level.

11. Plant system as in Claim 8, 9 or 10, whereby the system is designed to supply the first reservoir (26) at a higher temperature with coolant (9) with a higher temperature only as long as necessary to reach an effective temperature and a useful heat quantity, and then to switch over by a control system to a higher flow-through speed and the heating of the second or further reservoir (28).

## Revendications

1. Appareil pour la production simultanée d'énergie solaire sous forme thermique de même que sous forme électrique et qui présente les critères suivants :
Cellules solaires (1), tuyaux (8) remplis de d'eau comme produit de refroidissement et qui, sur option, sont faits en caoutchouc de silicone, une surface métallique (7) bonne conductrice de chaleur avec un dispositif de maintien (15), lequel est en contact, de préférence intensif, avec les tuyaux (8), la surface métallique elles-même est reliée élastiquement avec les cellules solaires avec une couche mince de séparation (4,5,6) très isolante pour l'électricité mais conductrice de la chaleur, et qui est située entre la surface métallique et les cellules solaires (1), et un couvercle de verre (14) où se trouve une couche d'air (13) d'une épaisseur maximum de 20mm, selon l'option choisie entre 3 et 12 mm, de manière que les cellules solaires ne soient pas en contact direct avec le couvercle de verre (14),
de la manière que la couche isolante entre les cellules solaires et l'élément de refroidissement métallique d' au minimum pourvue de deux oxydes ou silicates différents, dont une partie des oxydes ou silicates se trouvent dans une couche polymérique de vernis, et une part des oxydes ou silicates a une taille de particule de moins d'un micromètre, et
celle-ci est charactérisée par la distribution de la taille des particules a dans l'ensemble deux maxima très différentes si bien que la taille moyenne des grains d'un maximum de particule dans la couche isolante a au moins dix fois la valeur de l'autre maximum de la distribution de taille du graines.

2. Appareil d'après la revendication 1, dont la surface métallique (7) sert de surface de refroidissement métallique et qui est composée de profils avec leur revêtement isolant, les cellules solaires sont laminées sur toute la surface de façon élastiques.

3. Appareil d'après la revendication 2, dont les profils sont reliés - sur option - par une encoche et un ressort pour obtenir une surface totale plate et/ou les profils, aux lignes de raccordement, comportent une partie mince (12a) qui, grâce à leur petite dimension sert de point de rupture indiquée.

4. Appareil d'après l'une des revendications 1 à 3 où une isolation thermique sur le revers est prévue qui est composée d'une mousse dure à base de polyuréthane résistant à une température supérieure à 150 °.

5. Appareil d'après l'une des revendications précédentes de la manière que le dispositif de maintien (15) comporte plusieurs éléments de soutien courbés ou tordus dans lesquels un tuyau (8) est maintenu et dont les pointes (16) tournées l'une vers l'autre, se trouvent à une distance inférieure au diamètre du tuyau.

6. Appareil d'après l'une des revendications précédentes dont les tuyaux (8) sont en caoutchouc de silicone.

7. Appareil d'après l'une des revendications précédentes dont la couche d'air (13) a une épaisseur comprise entre trois et douze millimètres.

8. Système d'installation pour l'obtention simultané d'énergie solaire sous forme thermique de même que sous forme électrique et qui est équipé d'un appareil d'après les revendications 1 à 7.

9. Système d'installation d'après la revendication 8 avec un élément conçu pour la régulation du débit, de manière électronique ou par l'utilisation du principe de siphon thermique, de manière que la température requise à l'emploi s'adapte dans le liquide de refroidissement ou par exemple dans l'eau de refroidissement.

10. Système d'installation d'après les revendications 8 ou 9 qui est équipé d'au moins un dispositif de stockage (28) qui comporte de préférence une surface d'absorption, par mètre carré, de plus de quatre cents litres d'eau ou d'un mélange de pierre et d'eau de six cents litres et/ou qui est relié à une pompe à chaleur (WP) et/ou à une machine à refroidissement utilisant la chaleur et/ou qui comporte au moins premier dispositif de stockage (26), ce dernier comporte un niveau de température fixé d'avance de même que, au minimum, un autre dispositif de stockage qui sert de dispositif de stockage à long terme (28) avec un autre niveau de température.

11. Système d'installation d'après les revendications 8, 9 ou 10 de telle manière que le système est conçu pour que le premier dispositif de stockage (26) à température élevée ne soit alimenté de chaleur qu'aussi longtemps que nécessaire pour atteindre la température et la quantité de chaleur exigées et le système de réglage commute ensuite sur une vitesse de débit plus grande pour un échauffement d'un deuxième ou d'autres dispositifs de stockage (28).
